# EUROPÄISCHE PATENTSCHRIFT

(11) **EP 2 102 798 B1**
(45) Veröffentlichungstag und Bekanntmachung des Hinweises auf die Patenterteilung: **09.03.2011**
(21) Anmeldenummer: 07857386.2
(22) Anmeldetag: 11.12.2007
(51) Int. Cl.: G06K 19/077, B42D 15/10

(54) **PERSONALDOKUMENT UND VERFAHREN ZU SEINER HERSTELLUNG**
PERSONAL DOCUMENT AND METHOD FOR PRODUCING IT
DOCUMENT PERSONNEL ET PROCÉDÉ POUR SA FABRICATION

(30) Priorität: 15.12.2006 DE 102006059454
(43) Veröffentlichungstag der Anmeldung: 23.09.2009
(73) Patentinhaber: Bundesdruckerei GmbH, 10958 Berlin (DE)
(72) Erfinder: PAESCHKE, Manfred, 16352 Basdorf (DE); PFLUGHOEFFT, Malte, 13347 Berlin (DE); FISCHER, Jörg, 13053 Berlin (DE); BEYER-MEKLENBURG, Günter, 16816 Neuruppin (DE); MUTH, Oliver, 12277 Berlin (DE)
(74) Vertreter: Leske, Thomas
(86) Internationale Anmeldenummer: PCT/EP2007/063697
(87) Internationale Veröffentlichungsnummer: WO 2008/071697

(56) Entgegenhaltungen:
- EP-A- 1 321 480
- WO-A-02/15264
- WO-A-2005/069204
- WO-A-2006/000849
- DE-A1- 19 716 342
- DE-A1-102004 055 495

## Beschreibung

Die Erfindung betrifft ein Personaldokument, wie Personalausweis, Reisepass, Führerschein oder Mitarbeiterausweis sowie ein Verfahren zur Herstellung des Personaldokuments.

Aus dem Stand der Technik ist eine Vielzahl von Anwendungen bekannt, bei denen integrierte Schaltungen in Dokumente, bspw in Form von IC-Karten, eingebaut werden Hierdurch wird eine schnelle, teilweise auch automatisierte Verifikation erleichtert und die Fälschung solcher Dokumente erschwert. Außerdem können auf diese Weise zusätzliche Daten wie z.B. biometrische Daten zur Authentifizierung des Inhabers im Dokument gespeichert werden.

Der Nachteil der Einbringung von ICs in Dokumente ist jedoch, dass diese in vielen Fällen flexibel sein müssen und sehr starken, unterschiedlichen Belastungen, insbesondere Biegebelastungen im Laufe ihrer Gültigkeitsdauer unterworfen sind ICs auf Siliziumbasis hingegen sind spröde und brechen leicht, so dass die erforderliche Widerstandsfähigkeit nur bedingt gewährleistet werden kann. Deshalb werden Chips herkömmlich in Vergussmasse eingebettet und in dieser Form als "Chipmodul" in IC-Karten eingebaut, in denen sie aber keinen integralen Bestandteil bilden sondern einen Fremdkörper darstellen, der sich in seinen mechanischen Eigenschaften deutlich vom Trägermaterial der Karte unterscheidet. Besonders gefährdet sind dabei auch die Kontakte zwischen IC und Leiterbahn, wenn bei Verbiegung des Dokuments sich zwar das Substrat verbiegt, der IC jedoch starr bleibt. Dies limitiert insbesondere die Größe von ICs in flexiblen Dokumenten ganz erheblich.

Der Einbau großer und leistungsfähigerer dicker ICs ist bisher allenfalls in nicht-flexible Dokumente, bspw. die Buchdeckel von Pässen möglich, weil hier der starre Buchdeckel Dokument und IC schützt. Bei den ebenfalls relativ starren Chipkarten ist mindestens eine Dicke von 760 µm erforderlich, wobei wegen der Größe des Chipmoduls und seiner Dicke von bspw 350 µm wenig Platz zur Ausgestaltung des Kartenaufbaus übrig bleibt. Letztlich wird durch den Einbau eines Chips der Aufbau des Dokuments insgesamt instabiler, wodurch sich für potentielle Fälscher wiederum Möglichkeiten zur Manipulation ergeben.

Aus der WO 2006/000849 A1 ist ein gattungsgemäßes Personaldokument mit einem integrierten kontaktlos auslesbaren Chip bekannt, wobei das Personaldokument aus einem Laminat besteht, das zumindest aus einer Chipfolie, einem die Chipfolie auf der Strukturseite des Chips überdeckenden Substrat und einer die Chipfolie rückseitig überdeckende Abdeckschicht besteht. Die Chipfolie enthält einem Chip mit integriertem Schaltkreis und eine polymere Trägerfolie, welche abgesehen von Kontaktanschlüssen, sowohl auf der Strukturseite als auch auf der Rückseite des Chips aufgebracht ist. Der Chip ist mit einer auf dem Substrat vorgesehenen Antenne verbunden, welche der Kommunikation mit einem externen Lesegerät dient. Ein derartiges Personaldokument, nach dem der Oberbegriff des Anspruchs 1 gebildet ist, ist der Ausgangspunkt der Erfindung.

In der WO 2005/069204 A1 ist ein Halbleiter-Bauteil beschrieben, das aus einer flexiblen Basisschicht, einem integrierten Dünnfilm-Schaltkreis, einer Antenne und einer Trennschicht auf der Basisschicht besteht, wobei eine Verdrahtung den integrierten Dünnfilm-Schaltkreis und die Antenne verbindet und durch die Trennschicht führt. Dieses Bauteil ist in Form von Etiketten auf Gegenstände verschiedener Art aufzubringen, um diese vor Diebstahl oder Fälschung zu sichern. Beim Ablösen vom Gegenstand wird die Verdrahtung zerstört, da die Trennschicht reißt. Dadurch wird die Funktion des Dünnfilm-Schaltkreises beeinträchtigt.

In der WO 02/15264 A2 ist ein verkapseltes organisch-elektronisches Bauteil beschrieben, das ebenfalls elektronische Schaltkreise und eine Antenne aufweist, wobei die Schaltkreise bevorzugt organische , leitfähige Materialien umfassen. Die Bauteile sind als ein Verbund von mehreren Schichten ausgebildet, die aus Kunststofffolien sowie metallischen Barriereschichten bestehen, in welche die Schaltkreise und Antenne eingebettet sind. Die Barriereschichten dienen hierbei der Abschirmung der elektronischen Bauteile gegen schädliche Umwelteinflüsse.

Aus dem Stand der Technik (DE 196 51 566 B4) ist bekannt, Silizium-ICs von ihrer Rückseite her abzuschleifen und damit entsprechend auszudünnen. Solche ICs, die im Extremfall bis auf 10 µm bis 15 µm ausgedünnt werden können, sind gegenüber herkömmlichen dicken Chips erheblich flexibler, so dass sie bspw. auch in dünne, auf Papier basierende Dokumente eingebaut werden können (DE 196 30 648 A1).

Beim Einbau in Personaldokumente stellen aber auch derartige ICs nach wie vor einen Fremdkörper im Dokumentenverbund dar Sie verbinden sich nur unvollkommen mit den für Personaldokumente üblichen Substraten wie Papier und Kunststoffen, insbesondere Polycarbonat oder Polyethylenterephthalat. Hierdurch ist eine mit Absicht oder auch nur versehentlich herbeigeführte Trennung von Dokument und IC möglich, so dass die Risiken eines technische Versagens sowie die Möglichkeiten für manipulatorische Eingriffe weiterhin bestehen. Das Ziel der Erfindung ist, ein diesbezüglich verbessertes Personaldokument zu schaffen.

Dieses Ziel wird mit einem Personaldokument mit einem integrierten kontaktlosen Chip erreicht, das aus einem Laminat besteht, das zumindest eine Chipfolie, ein die Chipfolie auf der Strukturseite des Chips überdeckendes Substrat und eine die Chipfolie rückseitig überdeckende Abdeckschicht umfasst. Die Chipfolie selbst umfasst einen auf eine Dicke d ≤ 50 µm, bevorzugt d ≤ 30 µm, besonders bevorzugt d ≤ 20 µm ausgedünnten Chip mit integriertem Schaltkreis und eine polymeren Trägerfolie, welche abgesehen von Kontaktanschlüssen, sowohl auf der Strukturseite als auch auf der Rückseite des Chips aufgebracht ist, wobei der Chip beiderseits mit der Trägerfolie durch je ein Kopplungsreagens verbunden ist, dessen Moleküle eine erste chemisch funktionelle Gruppe aufweisen, die bevorzugt mit dem Halbleitermaterial der Chipoberfläche reagiert und dort eine kovalente Bindung ausbildet sowie eine zweite funktionelle Gruppe besitzen, welche bevorzugt mit der Polymermatrix der Trägerfolie reagiert. Der Chip ist mit einer auf dem Substrat vorgesehenen Antenne verbunden. Die Trägerfolie, das Substrat und die Abdeckschicht weisen jeweils kompatible Polymere auf, die miteinander mischbar, insbesondere ineinander löslich sind.

In dem erfindungsgemäßen Personaldokument wird somit kein herkömmliches Chipmodul eingesetzt, das einen vergleichsweise dicken Chip enthält, der in eine Vergussmasse eingebettet ist und damit einen starren Fremdkörper im Dokumentenverbund bildet. Vielmehr wird der Chip quasi direkt eingebracht, was eine bessere Verbindung zwischen Dokument und Chip ermöglicht, wobei die Materialien des Dokumentenkörpers die Funktionen übernehmen, die herkömmlich durch die Vergussmasse des Chipmoduls gewährleistet werden müssen. Der Begriff "Chipfolie" bezeichnet dabei ein halbleiterstrukturiertes Silizium, welches auf Polymerfolie appliziert und gedünnt ist, so dass nur noch eine Silizium-Schutzschicht von wenigen 10 µm auf der Halbleiterstruktur verbleibt Zwischen Chip und Trägerfolie wird dabei eine untrennbare Verbindung hergestellt, welche durch an den Chip kovalent gebundene Moleküle erzielt wird. Daraus ergibt sich der Vorteil, dass mechanische Belastungen, wie sie z.B. durch Biegen des Dokuments oder durch thermische Ausdehnung entstehen, vom Trägermaterial aufgenommen werden und die Halbleiterstruktur entsprechend geschützt wird.

Ein weiterer Vorteil liegt darin, dass bei einem Manipulationsversuch, bspw bei einer Delaminierung, die Chipfolie nicht zerstörungsfrei aus dem Dokument entfernt werden kann.

Die Polymere, die auf Unter- und Oberseite des Chips aufgebracht werden sollen kompatibel sein. Dies bedeutet, dass sie miteinander mischbar und insbesondere ineinander löslich sind. Hierdurch vermischen sich die Polymere bei der Lamination und bilden mit den ebenfalls kompatiblen benachbarten Oberflächen des Substrats und der Abdeckschicht einen einheitlichen Kartenkörper. Dies ist in optimaler Weise erfüllt, wenn jeweils identische Polymere vorliegen. In bevorzugter Ausführungsform umhüllen dabei die Polymerfolien, welche die Trägerfolie bilden, den Chip mit Ausnahme seiner Kontaktstellen vollständig

Vorteilhaft ist, wenn im Dokument über und unter dem Chip eine zusätzliche Schutzschicht gegen Licht eingebracht wird. Dies kann in Form einer Metallisierung, bspw. durch ein Hologramm-Patch, einer Farbe oder Ruß im Folienaufbau und dgl realisiert werden Damit können photoelektrische Effekte ausgeschlossen und die ordnungsgemäße Funktionsweise auch bei starkem Lichteinfall gewährleistet werden. Außerdem verhindert dies gezielte Manipulation des Chips mittels Lichteinstrahlung.

Bei dem erfindungsgemäßen Personaldokument sind die kompatiblen Polymere bevorzugt aus der Gruppe der thermoplastischen Kunststoffe, insbesondere der Polycarbonate (PC), der Polyethylenterephthalate (PET) einschließlich deren Derivate ausgewählt.

Bevorzugt werden bei dem erfindungsgemäßen Personaldokument Polymerfolien eingesetzt, die biaxial verstreckt sind und keine nennenswerten Spannungen aufbauen, die den IC beschädigen könnten. Insbesondere können die Schichten so aufgebaut werden, dass sich die durch die Molekülorientierung bedingte Kontraktionen und die thermischen Ausdehnungen der polymeren Schichten gegenseitig kompensieren

Der Chip des erfindungsgemäßen Personaldokuments ist mit einer im bzw auf dem Substrat befindlichen Antenne zum kontaktlosen Auslesen verbunden, wobei die Enden von auf dem Substrat aufgedruckten Leiterbahnen der Antenne mit dem Chip verbunden sind und mindestens eine Leiterbahn in einer Ebene unterhalb des Chips verläuft oder mindestens eine Leiterbahn am Ort des Chips eine Unterbrechung aufweist, die intern durch den Chip verbunden wird. Hierdurch wird vermieden, dass ein Ende der Antenne die Leiterbahnen kreuzend zum Kontakt mit dem Chip herausgeführt werden muss.

Vorzugsweise wird zwischen zumindest einer Seite des Chips und der polymeren Trägerfolie eine Passivierungsschicht, bspw aus Siliziumnitrid vorgesehen, wodurch sich zum Beispiel auch eine gute Haftung ergibt. Außerdem kann auf den Kontaktanschlussen eine elektrisch leitfähige Schicht, insbesondere bis zur Schichtdicke der polymeren Trägerfolie aufgebracht werden, die bspw. aus einem intrinsisch leitfähigen Polymer gebildet ist, aus einem versinterbaren nanoskaligen Metallpulver oder aus einem Kleber mit carbon nanotubes besteht.

Zum Ausgleich der bei den Antennenanschlüssen gegebenenfalls verbleibenden Zwischenräume wird mit Vorteil zwischen den Antennenanschlussflächen eine Füllstruktur auf der polymeren Oberfläche des Substrats vorgesehen, die beim Auflaminieren mit der Chipfolie verbunden wird.

Das gesteckte Ziel wird ferner mit einem Verfahren zur Herstellung eines Personaldokuments erreicht, das einen auf eine Dicke d ≤ 50 µm, bevorzugt d ≤ 30 µm, besonders bevorzugt d ≤ 20 µm ausgedünnten Chip als integralen Bestandteil aufweist und die folgenden Verfahrensschritte aufweist:
a) Herstellen einer Chipfolie durch Verbinden der Strukturseite und der Rückseite des ausgedünnten Chips mit jeweils einer polymeren Trägerfolie mittels eines Kopplungsreagens, dessen Moleküle eine erste chemisch funktionelle Gruppe aufweisen, die bevorzugt mit dem Halbleitermaterial der Chipoberfläche reagiert und dort eine kovalente Bindung ausbildet sowie eine zweite funktionelle Gruppe besitzen, welche bevorzugt mit der Polymermatrix der Trägerfolie reagiert,
b) Aufbringen der Chipfolie auf ein mit einer Antennenstruktur versehenes Substrat, das mit einem mit der Chipfolie kompatiblen Polymer versehen ist,
c) Verbinden der Chipfolie mit dem Substrat unter Kontaktierung der Antennenanschlüsse unter Druck- und Temperatureinwirkung mittels Lamination,
d) Auflaminieren einer Abdeckschicht, die mit einem mit der Chipfolie kompatiblen Polymer versehen ist.

Bevorzugt erfolgt die Kontaktierung von Chip und Antenne und die Ausbildung der kovalenten Bindung zwischen Chip und polymerer Trägerfolie durch die starke Annäherung unter der Einwirkung von Druck und Temperatur im Zuge des Laminationsprozesses.

In einer weiteren Ausführungsform kann zwischen den jeweiligen Bondpads während der Lamination eine Intermetallverbindung, eine den Kontakt herstellende Legierung auf der Basis einer nanoskaligen Verbindungstechnik erzeugt werden Diese Verfahren beruht auf dem Versintern von nanoskaligem Metallpulver, welches auf die Metallflächen aufgebracht wird. Das Versintern findet bei der Dokumentenlamination durch die Einwirkung von Wärme und Druck statt. Materialien für geeignete Metallpulver sind bspw Silber, Gold, Kupfer und Aluminium.

In Weiterbildung der Erfindung wird ein Kleber mit CNTs (carbon nanotubes) verwendet, welcher zusätzlich zur Herstellung des elektrischen Kontakts auch die Rissfestigkeit verbessert. Als weitere Kontaktierungsverfahren kommen anisotrope Kleber oder Ultraschallbonden zum Einsatz.

Die Verfahrensschritte des Herstellens der Chipfolie und des Laminierens auf das Substrat können in getrennten Arbeitsschritten erfolgen. Vorzugsweise wird aber die chemische Verbindung des Chips mit der Trägerfolie durch das Kopplungsreagens zugleich mit der Lamination der Chipfolie auf das Substrat vorgenommen, wobei im selben Arbeitsgang auch die Kontaktierung der Antennenanschlüsse erfolgt.

Neben der erhöhten Sicherheit, Stabilität und Haltbarkeit wird somit auch die Handhabbarkeit während der Produktion deutlich verbessert, wodurch sich die Kosten für das Personaldokument reduzieren. Die polymere Trägerfolie kann auch bereits auf die Strukturseite eines endgetesteten Wafers aufgebracht werden und damit als Haft- und Stabilisierungsschicht dienen, wenn die Rückseite des Wafers abgetragen wird. Als Substratmaterial dienen thermoplastische Kunststoffe, insbesondere Polycarbonat (PC), Polyethylenterephthalat (PET), einschließlich ihrer Derivate wie z.B. Glykolmodifiziertes PET (PETG), Polyehtylennaphthalat (PEN), Acrylnitril-Butadien-Styrol Copolymerisat (ABS), Polyvinylchlorid (PVC), Polyvinylbutyral (PVB),Polymethylmethacrylat (PMMA), Polyimid (PI), Polyvinylakohol (PVA), polystyrol (PS), Polyvinylphenol (PVP), Polyethylen (PE) und Polyoropylen (PP). Das Substrat, dessen Träger bspw. Papier sein kann, weist dabei zumindest eine Oberflächenschicht aus einem dieser thermoplastischen Polymere oder deren Derivate, bspw in Form eines koextrudierten Substrats auf.

Bevorzugt wird dabei vor dem Aufbringen der Chipfolie in Zwischenräumen zwischen den Antennenanschlussflächen eine polymere Füllstruktur angeordnet, so dass auch an diesen Stellen ein vollständiger Kontakt zwischen Chipmodul und Substrat gegeben ist. Zum gleichen Zweck können auch noch weitere vorteilhafte Maßnahmen ergriffen werden: So kann vor dem Aufbringen des Chipmoduls ein Präge- und Pressvorgang auf den Bereich des Substrates ausgeübt werden, in den das Chipmodul positioniert werden soll. Außerdem kann vor dem Verbinden des Chipmoduls mit dem Substrat auf den elektrischen Anschlüssen des Chips, wie zuvor beschrieben, elektrisch leitfähiges Material angeordnet werden, wodurch die Kontaktierung des Chipmoduls mit den Antennenanschlüssen erleichtert wird, und/oder vor dem Verbinden mit der Trägerfolie auf dem Chip eine Passivierungsschicht aufgetragen wird.

In anderer Ausführungsform wird das erfindungsgemäße Verfahren so geführt, dass die Chipfolie durch Verbinden der Strukturseite und der Rückseite des ausgedünnten Chips mit einer polymeren Trägerfolie mittels eines Kopplungsreagens hergestellt wird, wobei wiederum die Moleküle des Kopplungsreagens eine erste chemisch funktionelle Gruppe aufweisen, die bevorzugt mit dem Halbleitermaterial der Chipoberfläche reagiert und dort eine kovalente Bindung ausbildet sowie eine zweite funktionelle Gruppe besitzen, welche bevorzugt mit der Polymermatrix der Trägerfolie reagiert. Die Chipfolie wird derart auf ein Substrat aufgebracht, dass die Chip-Rückseite zum Substrat weist, das mit einem mit der Chipfolie kompatiblen Polymer versehen ist Nach dem Verbinden der Chipfolie mit dem Substrat unter Druck- und Temperatureinwirkung mittels Lamination, wird auf das so hergestellte Laminat die Antenne aufgebracht, wobei dieses Aufbringen vorzugsweise drucktechnisch erfolgt. Schließlich wird die Abdeckschicht auflaminiert, die ebenfalls mit einem mit der Chipfolie kompatiblen Polymer versehen ist

Weitere Merkmale und Vorteile der Erfindung ergeben sich aus der nachfolgen Beschreibung der Figuren.

Es zeigen:
- Fig. 1:: eine schematische Darstellung des grundsätzlichen Aufbaus eines erfindungsgemäßen Personaldokuments;
- Fig. 2:: eine in das Personaldokument zu integrierende Chipfolie;
- Fig. 3:: eine Chipfolie mit elektrisch leitfähiger Schicht auf den IC-Pad- Anschlüssen;
- Fig. 4:: eine weitere Ausführungsform der Chipfolie;
- Fig. 5:: eine schematische Darstellung des Aufbringens der Chipfolie auf das Substrat;
- Fig. 6:: das Aufbringen der Chipfolie mit einer polymeren Füllstruktur zwischen den Antennen-Anschlussflächen;
- Fig 7:: a) ein Substrat mit gedruckter Antenne;
b) das Substrat mit aufgebrachtem Chip;
- Fig. 8:: a) eine zweite Ausführungsform der gedruckten Antenne;
b) die zweite Ausführungsform mit aufgebrachtem Chip;
- Fig. 9:: Schema der Verbindung zwischen Halbleiter und Polymermatrix durch eine Kopplungsreaktion mit chemischer Bindung;
- Fig 10:: Beispiel einer Kopplungsreaktion;

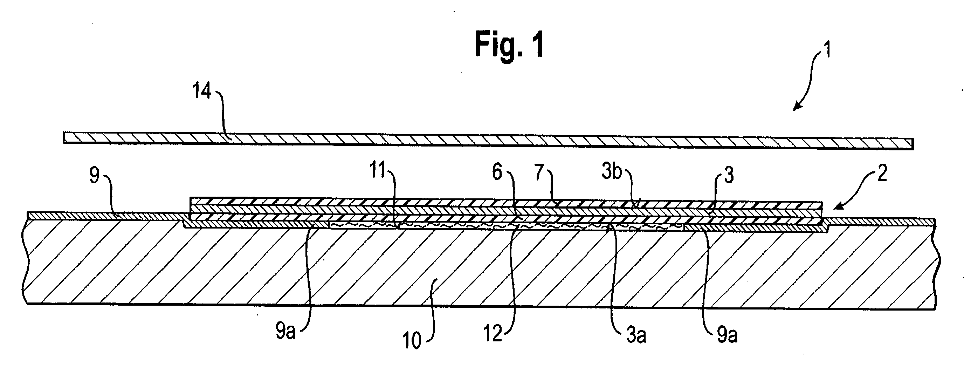

Figur 1 zeigt schematisch den grundsätzlichen Aufbau des Personaldokuments 1 in einem Querschnitt durch die Anschlussflächen 9a der Antennenstruktur 9. Die Chipfolie 2 ist mit der Strukturseite 3a des auf eine Dicke von ca 30 µm ausgedünnten Chips 3 auf ein Substrat 10 aufgebracht, das bspw auf Papier basiert aber zumindest auf der der Chipfolie 2 zugewandten Seite eine polymere Oberfläche 11 aus PC oder PET aufweist. Auf dem ausgedünnten Chip 3 ist beiderseits eine polymere Trägerfolie 6, 7 aufgebracht, die mit der polymeren Oberfläche 11 des Substrats kompatibel ist und mit dieser bei der Lamination eine weitgehend homogene Verbindung eingeht. Auf der Strukturseite des Chips ist zwischen den Antennen-Anschlussflächen 9a eine polymere Füllstruktur 12 aus ebenfalls kompatiblem Material angeordnet. Die rückseitige Trägerfolie 7 verbindet sich bei der Lamination mit der Abdeckschicht 14, die in Figur 1 der Ubersichtlichkeit halber abgehoben dargestellt ist.

Die Kontaktierung des Chips und seine Verbindung mit dem Substrat erfolgt durch eine der zuvor genannten Kontaktierungsmöglichkeiten, wobei vor der Laminierung und Kontaktierung ein Prägearbeitsschritt in dem Bereich des Substrats 10 ausgeführt wurde, in den die Chipfolie 2 positioniert werden soll, und der im dargestellten Beispiel u. a. Bereiche der Antennen-Anschlussflächen 9a der polymeren Oberfläche 11 des Substrats 10 und der Füllstruktur 12 umfasst. Auf diese Weise wird eine Vertiefung im µm-Bereich erzeugt, in den sich der Chip einfügt.

Nach dem Prägen, dem Aufbringen der Chipfolie 2 und deren Auflaminieren auf das Substrat 10 unter gleichzeitiger Kontaktierung wird anschließend die rückseitige Abdeckschicht 14 auflaminiert. Die Chipfolie 2 und die korrespondierenden Schichten des Substrats 10 und der Abdeckschicht 14 bestehen aus kompatiblen Polymeren, die ineinander löslich sind und eine Einheit ergeben, die zerstörungsfrei nicht mehr aufgetrennt werden kann. Der Chip selbst bildet dabei einen mechanisch tragenden, integralen Bestandteil des Dokumentenverbundes. Gegebenenfalls kann das Auflaminieren der rückseitigen Abdeckschicht 14 auch im gleichen Arbeitsgang zusammen mit der Lamination von Chipfolie und Substrat erfolgen.

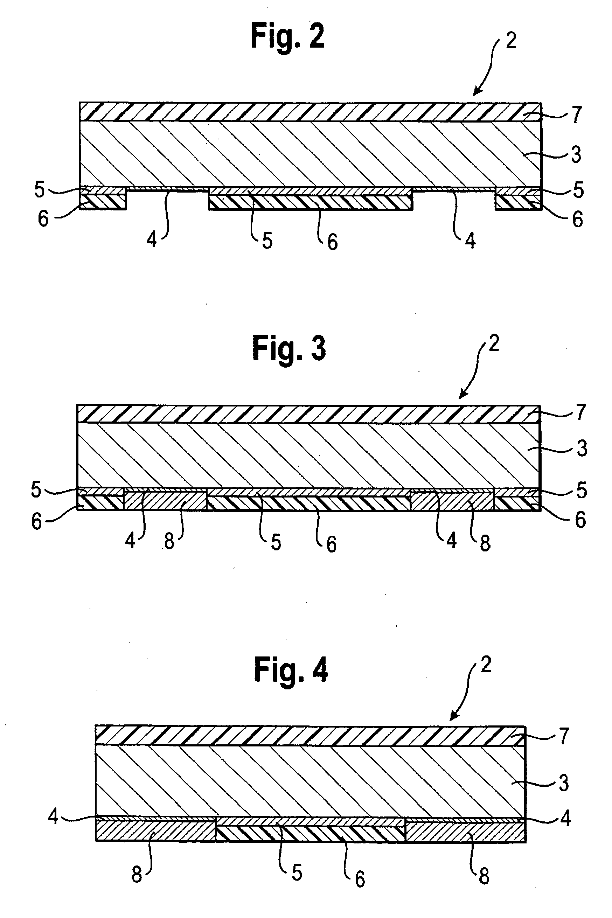

In Figur 2 ist eine in das Personaldokument einzubauende Chipfolie 2 dargestellt. Auf dem ausgedünnten Chip 3 ist strukturseitig eine Passivierungsschicht 5 aus Siliziumnitrid aufgebracht, die wiederum von einer polymeren Trägerfolie 6 aus thermoplastischem Polycarbonat (PC) bedeckt ist. Die Trägerfolie 6 lässt dabei lediglich die IC-Pad-Anschlüsse 4 frei. Durch die Anordnung der thermoplastischen PC-Schicht 6 auf der Passivierungsschicht 5 verbietet sich zwar die Anwendung eines Lötprozesses, gleichwohl ist eine vergleichsweise kalte Kontaktierung auf dem Substrat mittels der bereits beschriebenen Kontaktierungsverfahren möglich. Bei der Laminierung der Chipfolie 2 auf das Substrat wird damit sowohl der elektrische Kontakt sondern auch eine mechanische Montage vollzogen. Bei einem Substrat mit einer polymeren Oberfläche, die ebenfalls.aus PC besteht, ergibt sich ein weitestgehend sortenreiner Verbund.

Die Chiprückseite ist ebenfalls mit einer polymeren Trägerfolie 7 bedeckt, die bspw. in gleicher Weise wie auf der Strukturseite ausgebildet sein kann. Diese Schicht 7 verbessert einerseits die mechanische Stabilität der flexiblen dünnen Chipfolie 2 und deren Handhabung, andererseits bewirkt sie bspw bei einer ultraschall-gestützten Kontaktierung eine verbesserte Energieeinkopplung. Die rückseitige Polymerschicht 7 kann dabei so ausgebildet sein, dass sie über die Kante des Chips 3 reicht und mit der vorderseitigen Trägerfolie 6 verbunden wird, so dass die Trägerfolie den gedünnten Chip 3 vollständig umhüllt.

Eine weitere Ausgestaltung der Chipfolie 2 zeigt Figur 3. Die Trägerfolie 6, 7 des gedünnten Chips 3 ist dabei, wie zuvor anhand von Figur 2 beschrieben, ausgeführt. Zusätzlich ist auf den IC-Pads 4, den elektrischen Anschlüssen des ICs, eine elektrisch leitfähige Schicht 8 angeordnet. Diese leitfähige Schicht 8 kann bspw. metallisch mittels chemischer bzw. galvanischer Prozesse hergestellt sein. Sie wird vorzugsweise nur bis zur Höhe der polymeren Beschichtung 6 ausgeführt. Gegebenenfalls kann die Schichtdicke des elektrisch leitenden Materials 8 auch geringer gewählt werden als die der polymeren Schicht 6. Sie kann bspw. auch durch elektrisch leitfähige polymere Systeme gebildet sein und mittels Dispenser, Siebdruck, Ink-jet oder Schablonentechnik aufgebracht werden. Als elektrisch leitfähige polymere Schichtsysteme kommen außer den intrinsisch leitfähigen auch solche in Betracht, bei denen elektrisch leitfähige Partikel in eine Polymermatrix eingebettet sind. Insbesondere kommen hierfür u.a. nanoskalige Partikel infrage, wobei die Leitfähigkeit bei gleichem Füllgrad durch geeignete Mischung aus unterschiedlichen Partikelgeometrien erhöht werden kann. Insbesondere kann durch eine Beimengung von CNTs (carbon nanotubes) oder MWCNTs (multi-walled carbon nanotubes) neben der Herstellung ausreichender Leitfähigkeit bei geringen Konzentrationen auch die Spannungsrissempfindlichkeit signifikant reduziert werden.

In Figur 4 ist ebenfalls ein ausgedünnter Chip 3 dargestellt, bei dem im Vergleich mit dem Beispiel der Figur 3 die IC-Pad-Anschlüsse bis an die Chip-Kanten verlaufen. Die Bezugsziffern bezeichnen dabei dieselben Bauteile wie in den vorausgegangenen Figuren.

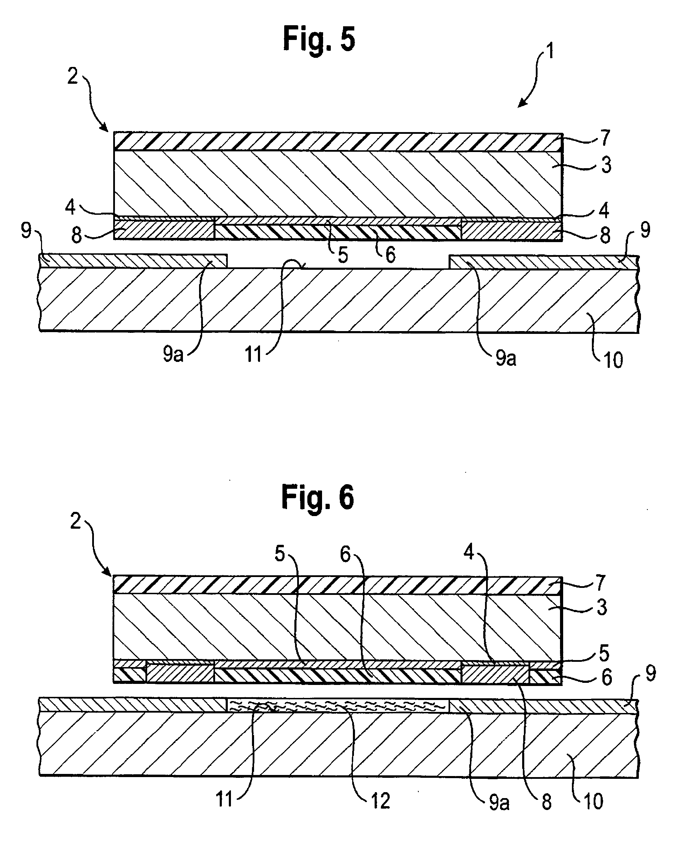

Figur 5 zeigt schematisch das Aufbringen der Chipfolie 2 auf das Substrat 10 des Personaldokuments 1. Dabei wird das in Figur 4 dargestellte Chipmodul 2 mit dem ausgedünnten Chip 3 verwendet. Das auf Papier basierte Substrat 10 besitzt eine polymere, durch PC gebildete Oberfläche 11, auf der die Antenne 9 mit den Anschlussflächen 9a angeordnet ist. Wie in den vorausgehenden Figuren ist die vertikale Erstreckung im Vergleich zu den lateralen Abmessungen wesentlich überhöht dargestellt. Tatsächlich beträgt die Dicke ausgedünnter Chips weniger als 50 µm und kann sogar geringer als 30 µm oder 20 µm sein. Die Schichtstärken für die IC-Pad-Anschlüsse 4 und die Passivierungsschicht 5 liegen im Sub-Mikrometerbereich, die Schichtstärken der Polymerfolie 6 und der elektrisch leitfähigen Auflage 8 liegen typischerweise bei wenigen µm bis zu etwa 10 µm. Die Schichtstärke der Antennenanschlussflächen 9a auf dem Substrat 10, 11 liegt im Bereich mehrerer µm bis zu etwa 15 µm, wobei bevorzugt eine polymere gedruckte Antennenstruktur 9 auf der Basis von Silberpasten verwendet wird, die erst nach einem Laminiervorgang und einer Temperatur-Druckbehandlung bei 130° bis 200° und einer Flächenpressung von 300 N/cm² bis etwa 550 N/cm² jene 3 Ω bis 10 Ω bei einer ISO 14443 A/B Spule erreicht, die für eine kontaktlose Kommunikation erforderlich sind. Die Antenne kann nicht nur auf drucktechnischem Wege hergestellt werden. Ebenso kann sie als Drahtschlinge gelegt, geätzt, aufgedampft oder mit Transfertechnik übertragen werden.

Bei entsprechender geometrischer Gestaltung der Antennenanschlussflächen 9a und mit einem geeigneten Anpressdruck, gegebenenfalls mit Ultraschallunterstützung werden bei der Lamination die elektrisch leitenden Flächen 8, 9a und ebenso die isolierend ausgebildeten Schichten 6, 11 miteinander verbunden.

In Figur 6 ist eine weitere Ausgestaltung des erfindungsgemäßen Personaldokuments 1 dargestellt. Die Figur zeigt das Dokument schematisch im Schnitt im nicht kontaktierten Zustand, wobei gegenüber der zuvor beschriebenen Ausführung eine zusätzliche Polymerstruktur 12 auf der Oberfläche 11 des Substrats 10 im Zwischenbereich der Antennenanschlussflächen 9a angeordnet ist. Die Füllstruktur 12 geht bei der der Auflaminierung der Chipfolie 2 mit der Trägerfolie 6 eine Verbindung ein und führ zu einer geringerer Druckbelastung des Chips 3.

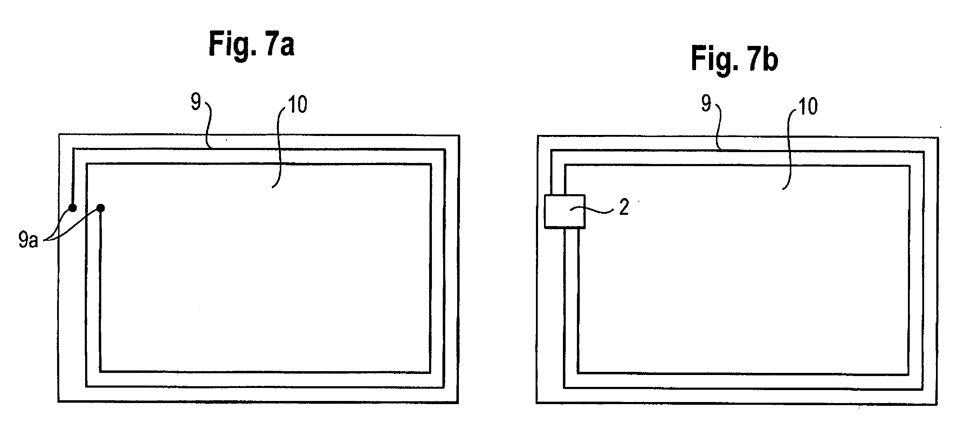

Figur 7a zeigt ein Substrat 10 mit Antenne 9, die spiralig am Rande des Substrats 10 aufgedruckt ist. Zur Vereinfachung sind nur drei Windungen (nicht maßstäblich) gezeichnet. Hierbei wird zunächst die Leiterbahn hergestellt. Um den IC kontaktieren zu können wird üblicherweise eines der Enden der Leiterbahn nach innen herausgeführt, wobei zuvor ein Isolator aufgebracht werden muss, um eine Kurzschluss durch die sich kreuzenden Leiterbahnen zu vermeiden. Bei dem erfindungsgemäßen Personaldokument werden zwei Antennenanschlussflächen 9a als Kontakt von der Leiterbahn zur Strukturseite des IC hergestellt, wie es Figur 7a zeigt. Auf diese Struktur wird dann die Chipfolie 2 mit dem ausgedünnten Chip gemäß Figur 7b aufgebracht und gebondet. Die durchgehende Leiterbahn der Antenne 9 läuft dabei unter der Chipfolie 2 entlang. Damit kann ein Verfahrensschritt bei der Herstellung des Personaldokuments eingespart werden.

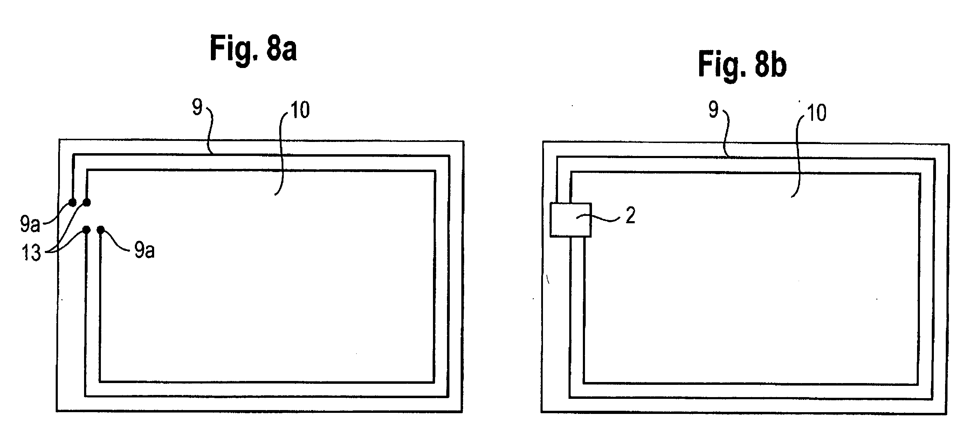

Eine zweite Ausführungsform zeigt Figur 8. Hierbei ist die Leitungsverbindung der an den zusätzlichen Kontaktstellen 13 unterbrochenen Leiterbahn in das Chipmodul 2 integriert, so dass unterhalb des Chips keine Leiterbahn aufgedruckt werden muss. Der Nachteil, zusätzlich Kontaktstellen 13 vorsehen zu müssen wird dabei aufgewogen durch den Vorteil einer Erhöhung der Durchschlagfestigkeit und Verringerung des Kurzschlussrisikos.

In der polymeren Beschichtung des ICs sind Aussparungen für die zumindest zwei Kontakte zum Anschluss der RFID-Antenne vorgesehen. Die Kontaktierung erfolgt im Zuge der Laminierung, erfordert somit keinen Lötprozess, der üblicherweise eine Temperaturbelastung im Bereich über 240° bedeutet und ein entsprechend lötbeständiges Substrat erfordern würde.

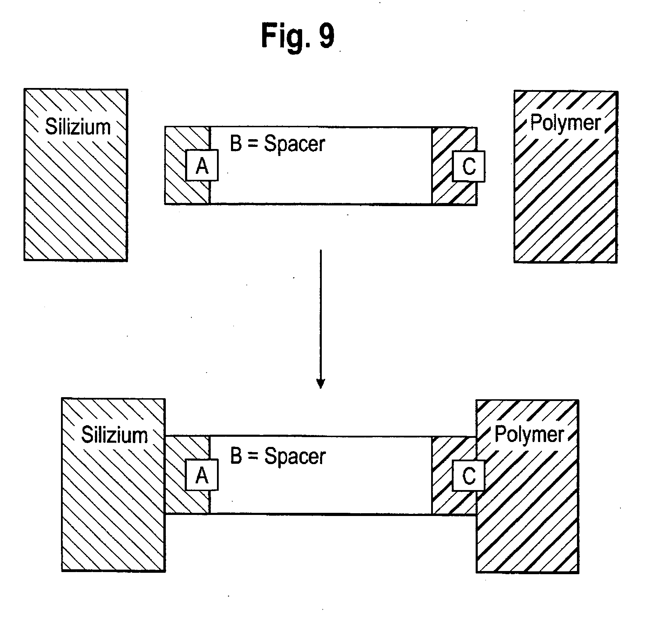

In Figur 9 ist der grundsätzliche Mechanismus dargestellt, mit dem sich der auf Silizium basierende Chip mit einem Polymer praktisch untrennbar zu einer Chipfolie verbinden lässt, so dass der Chip letztlich in einen Laminatverbund als integraler Bestandteil eingebaut werden kann. Hierzu bedarf es eines Kopplungsreagens, welches eine chemische Bindung sowohl zum Silizium des Chips als auch zur umgebenden Polymermatrix eingehen kann. Geeignete, typischerweise bifunktionale Molekule lassen sich allgemein in den molekularen Bestandteilen A-B-C darstellen, wobei A eine chemisch funktionelle Gruppe ist, die bevorzugt mit dem Halbleitermaterial der Chipoberfläche reagiert und B ein molekulares Zwischenstück (spacer) sowie C eine chemisch funktionelle, bevorzugt mit dem Polymer reagierende Gruppe, bezeichnen. Wesentlich ist somit, dass innerhalb eines Moleküls funktionale Gruppierungen vorliegen, die selektiv mit kompatiblen chemischen Gruppen beim Halbleiter bzw. der Polymermatrix reagieren. Solche Moleküle, die dieser Forderung genügen, sind in der Tabelle I zusammengestellt. Ihnen ist gemeinsam, dass sie auf einer Seite eine Silan- oder Alkoxysilanfunktionalität A aufweisen. Des weiteren verfügen sie über Spacer B sowie eine weitere Funktionalität C, die selektiv ein Bindung zum Polymer eingehen kahn. Bei letzterer handelt es sich bevorzugt um ein kovalente Bindung. Es können aber auch Wasserstoff-Brückenbindungen oder Van-der-Waals-Bindungen sein. Das Kopplungsreagens hat die allgemeine Formel A₃SiBₙC, wobei die Funktionalitäten A, B und C aus Tabelle I beliebig kombiniert sein können. Es können auch mehrere Spacer-Gruppen B oder Funktionalitäten A in einem Molekül realisiert sein, bspw. in der Form A'A"A"'SiB'ₙB"ₘB''ᵢ.

Bevorzugt werden die Polymere mittels lebender Polymerisation hergestellt, so dass bei Kontakt mit der reaktiven Komponente C eine Verknüpfung mit Polymerketten erfolgt. In anderer Ausführungsform kann das Kopplungsreagens den Katalysator zur Anbindung an das Polymer auch intrinsisch in sich tragen, wie dies im Beispiel der Spacer-Gruppe (CH₂)ₙ-NH- für basenkatalysierte Reaktionen der Fall ist.

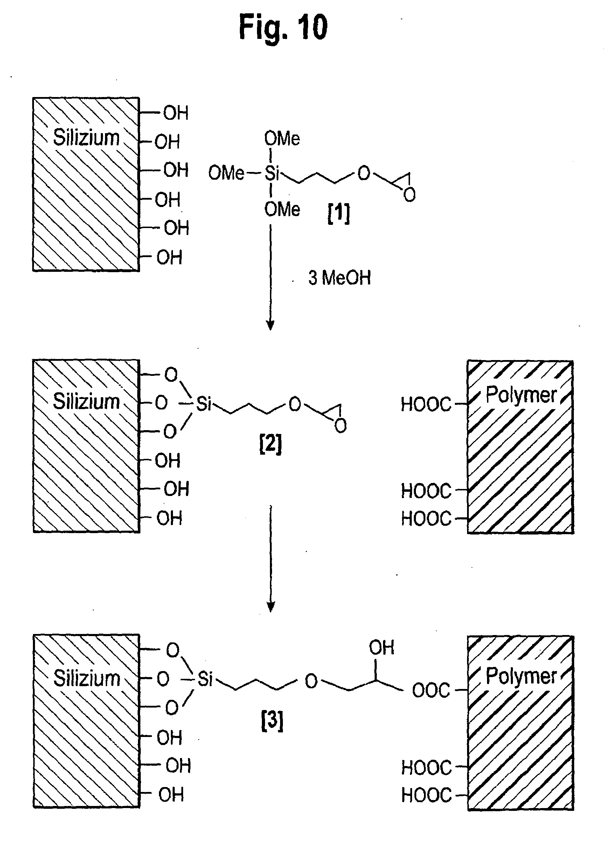

Ein dezidiertes Beispiel für eine geeignete Kopplungsreaktion ist in Figur 10 dargestellt. Halbleiter wie Si lassen sich an der Oberfläche derart modifizieren, dass OH-Gruppen zur Verfügung stehen. Diese können mit einem Tri-Methoxy-Epoxy-Siloxan ([1] in Figur 10) unter Abspaltung von Methanol zum Addukt [2] reagieren. Das Silizium ist somit mit Epoxidgruppen oberflächenmodifiziert. Das Addukt [2] wiederum reagiert mit Polymeren wie PET oder PC, welche an der Oberfläche Carboxylgruppen tragen, zum Addukt [3], womit der Si-Halbleiter kovalent an die Polymermatrix gebunden ist. Carboxylgruppenmodifiziertes PC ist aus dem Stand der Technik (bspw. US 4959411A) bekannt.

In der beschriebenen Weise wird somit ein Personaldokument mit einem Chip geschaffen, der einen integralen Bestandteil des Dokument bildet und praktisch nicht mehr aus dem Dokumentenverbund gelöst werden kann

**Tabelle I**

| A | B | C |
|---|---|---|
| -H | CH₂ | -CH₃ |
| -OCH₃ | -CH=CH- | -CH=CH₂ |
| -O-CH₂-CH₃ | -O-(CH₂)ₙ- | 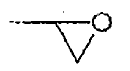 |
| -O-CH₂-CH₂-O-CH₃ | -(CH₂)ₙ-NH- | 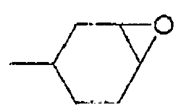 |
| | 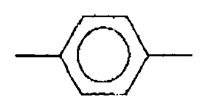 | -SH |
| -Cl | 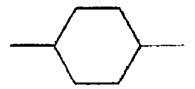 | -NH₂ |
| -Br | -(CH₂)ₙ-COO- | -COOH |
| | -(CH₂)ₙ-CONH- | -OH |
| -CN | | -F |
| -(CH₂)ₙ-SH | | -Cl |
| -N₂ | | -Br |
| | | -I |
| | | -CN |
| | | -OCN |
| | | -NCO |
| | | -NCS |
| | | -SCN |
| | | -N₂ |
| | | 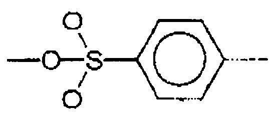 |
| | | 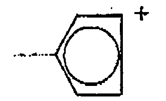 |
| | | -Sₓ |
| | | -CHO |

### Bezugszeichen

- 1: Personaldokument
- 2: Chipfolie
- 3: ausgedünnter Chip
- 3a: Strukturseite des Chips
- 3b: Rückseite des Chips
- 4: IC-Pad-Anschluss
- 5: Passivierungsschicht
- 6: polymere Trägerfolie (Strukturseite des Chips)
- 7: polymere Trägerfolie (Rückseite des Chips)
- 8: elektrisch leitfähiges Material
- 9: Antenne
- 9a: Antennenanschlussflächen
- 10: Substrat
- 11: polymere Oberfläche des Substrats
- 12: polymere Füllstruktur
- 13: zusätzliche Antennenkontakte
- 14: Abdeckschicht

## Patentansprüche

1. Personaldokument mit einem integrierten kontaktlos auslesbaren Chip,
wobei
das Personaldokument (1) aus einem Laminat besteht, das zumindest aus einer Chipfolie (2), einem die Chipfolie (2) auf der Strukturseite (3a) des Chips überdeckenden Substrat (10) und einer die Chipfolie (2) rückseitig überdeckende Abdeckschicht (14) besteht,
wobei
die Chipfolie (2) aus einem Chip (3) mit integriertem Schaltkreis und einer polymeren Trägerfolie (6, 7) besteht, welche abgesehen von Kontaktanschlüssen, sowohl auf der Strukturseite (3a) als auch auf der Rückseite (3b) des Chips (3) aufgebracht ist, und
wobei
der Chip (3) mit einer auf dem Substrat (10) vorgesehenen Antenne (9) verbunden ist
**dadurch gekennzeichnet, dass**
der Chip (3) auf eine Dicke d ≤ 50 µm ausgedünnt ist,
der Chip (3) beiderseits mit der Trägerfolie (6, 7) durch je ein Kopplungsreagens verbunden ist, dessen Moleküle eine erste chemisch funktionelle Gruppe aufweisen, die mit dem Halbleitermaterial der Chipoberfläche reagiert und dort eine kovalente Bindung ausbildet sowie eine zweite funktionelle Gruppe besitzen, welche mit der Polymermatrix der Trägerfolie (6, 7) reagiert,
wobei die Trägerfolie (6, 7), das Substrat (10) und die Abdeckschicht (14) jeweils kompatible Polymere aufweisen, die miteinander mischbar sind.

2. Personaldokument nach Anspruch 1, bei welchem über und unter dem Chip (3) eine zusätzliche Schutzschicht gegen Licht eingebracht ist.

3. Personaldokument nach Anspruch 1 oder2, bei welchem durch die Molekülorientierung bedingte Kontraktionen der polymeren Schichten sich gegenseitig kompensieren.

4. Personaldokument nach einem der Ansprüche 1 bis 3, bei welchem thermische Ausdehnungen der polymeren Schichten sich gegenseitig kompensieren.

5. Personaldokument nach einem der Ansprüche 1 bis 4, bei welchem die polymeren Schichten biaxial verstreckte Polymerfolien umfassen.

6. Personaldokument nach einem der Ansprüche 1 bis 5, bei welchem die Trägerfolie (6, 7) den Chip (3) mit Ausnahme seiner Kontaktstellen vollständig umhüllt.

7. Personaldokument nach einem der Ansprüche 1 bis 6, bei welchem auf den Kontaktanschlüssen eine elektrisch leitfähige Schicht (8), aufgebracht ist und bei welchem die elektrisch leitfähige Schicht (8) aus einem intrinsisch leitfähigen Polymer gebildet ist.

8. Personaldokument nach Anspruch 7, bei welchem die elektrisch leitfähige Schicht (8) aus einem versinterbaren nanoskaligen Metallpulver besteht.

9. Personaldokument nach einem der Ansprüche 1 bis 8, bei welchem auf dem Substrat (10) zwischen den Antennen-Anschlussflächen (9a) eine polymere Füllstruktur vorgesehen ist, die mit der Trägerfolie (6) des Chips durch Lamination verbindbar ist.

10. Verfahren zur Herstellung eines Personaldokuments das einen auf eine Dicke d ≤ 50 µm ausgedünnten Chip (3) als integralen Bestandteil aufweist, mit den Verfahrensschritten
a) Herstellen einer Chipfolie (2) durch Verbinden der Strukturseite (3a) und der Rückseite (3b) des ausgedünnten Chips (3) mit einer polymeren Trägerfolie (6, 7) mittels eines Kopplungsreagens, dessen Moleküle eine erste chemisch funktionelle Gruppe aufweisen, die mit dem Halbleitermaterial der Chipoberfläche reagiert und dort eine kovalente Bindung ausbildet sowie eine zweite funktionelle Gruppe besitzen, welche mit der Polymermatrix der Trägerfolie reagiert,
b) Aufbringen der Chipfolie (2) auf ein mit einer Antennenstruktur (9) versehenes Substrat (10), das mit einem mit der Chipfolie (2) kompatiblen Polymer versehen ist,
c) Verbinden der Chipfolie (2) mit dem Substrat (10) unter Kontaktierung der Antennenanschlüsse (9a) unter Druck- und Temperatureinwirkung mittels Lamination,
d) Auflaminieren einer Abdeckschicht (14), die mit einem mit der Chipfolie (2) kompatiblen Polymer versehen ist.

11. Verfahren nach Anspruch 10, bei welchem das Verbinden des Chips (3) mit der Trägerfolie (6, 7) durch Reaktion des Kopplungsreagens mit dem Halbleitermaterial der Chipoberfläche einerseits und der Polymermatrix andererseits zusammen mit der Lamination der Chipfolie (2) mit dem Substrat (10) und der Kontaktierung der Antennenanschlüsse erfolgt.

12. Verfahren nach einem der Ansprüche 10 oder 11, bei dem vor dem Aufbringen der Chipfolie (2) in Zwischenräumen zwischen den Antennenanschlussflächen (9a) auf dem Substrat (10) eine polymere Füllstruktur (12) angeordnet wird.

13. Verfahren nach einem der Ansprüche 10 bis 12, bei dem vor dem Aufbringen der Chipfolie (2) ein Präge- und Pressvorgang auf den Bereich des Substrates (10) ausgeübt wird, in den der Chip (3) positioniert werden soll.

14. Verfahren nach einem der Ansprüche 10 bis 13, bei dem vor dem Verbinden der Chipfolie (2) mit dem Substrat (10) auf den elektrischen Anschlüssen des Chips elektrisch leitfähiges Material (8) angeordnet wird.

15. Verfahren zur Herstellung eines Personaldokuments das einen auf eine Dicke d ≤ 50 µm ausgedünnten Chip (3) als integralen Bestandteil aufweist, mit den Verfahrensschritten
a) Herstellen einer Chipfolie (2) durch Verbinden der Strukturseite (3a) und der Rückseite (3b) des ausgedünnten Chips (3) mit einer polymeren Trägerfolie (6, 7) mittels eines Kopplungsreagens, dessen Moleküle eine erste chemisch funktionelle Gruppe aufweisen, die mit dem Halbleitermaterial der Chipoberfläche reagiert und dort eine kovalente Bindung ausbildet sowie eine zweite funktionelle Gruppe besitzen, welche mit der Polymermatrix der Trägerfolie (6, 7) reagiert,
b) Aufbringen der Chipfolie (2) auf ein Substrat (10), das mit einem mit der Chipfolie (2) kompatiblen Polymer versehen ist,
c) Verbinden der Chipfolie (2) mit dem Substrat (10) unter Druck- und Temperatureinwirkung mittels Lamination,
d) Aufbringen einer Antenne (9) auf das so hergestellte Laminat.
e) Auflaminieren einer Abdeckschicht (14), die mit einem mit der Chipfolie kompatiblen Polymer versehen ist.

## Claims

1. Personal document having an integrated contactlessly readable chip,
wherein
the personal document (1) comprises a laminate which comprises at least a chip film (2), a substrate (10) covering the chip film (2) on the patterned side (3a) of the chip, and a top layer (14) covering the reverse of the chip film (2), wherein
the chip film (2) comprises a chip (3) having an integrated circuit and a polymeric carrier film (6, 7) which, besides contact connections, has been applied both to the patterned side (3a) and to the rear (3b) of the chip (3), and wherein,
the chip (3) is connected to an antenna (9) provided on the substrate (10)
**characterized in that**
the chip (3) has been thinned to a thickness d ≤ 50 *µ*m,
both sides of the chip (3) are connected to the carrier film (6, 7) by a respective coupling reagent, the molecules of which have a first chemically functional group which reacts with the semiconductor material of the chip surface and forms a covalent bond thereon and also have a second functional group which reacts with the polymer matrix of the carrier film (6, 7),
wherein the carrier film (6, 7), the substrate (10) and the top layer (14) each have compatible polymers which can be mixed with one another.

2. Personal document according to Claim 1, in which an additional protective layer against light has been introduced above and below the chip (3).

3. Personal document according to Claim 1 or 2, in which contractions in the polymeric layers which are caused by the molecular orientation compensate for one another.

4. Personal document according to one of Claims 1 to 3, in which thermal expansions in the polymeric layers compensate for one another.

5. Personal document according to one of Claims 1 to 4, in which the polymeric layers comprise biaxially drawn polymer films.

6. Personal document according to one of Claims 1 to 5, in which the carrier film (6, 7) completely envelops the chip (3) with the exception of the contact points thereof.

7. Personal document according to one of Claims 1 to 6, in which an electrically conductive layer (8) has been applied to the contact connections and in which the electrically conductive layer (8) is formed from an intrinsically conductive polymer.

8. Personal document according to Claim 7, in which the electrically conductive layer (8) comprises a sinterable nanoscalar metal powder.

9. Personal document according to one of Claims 1 to 8, in which a polymeric filling structure has been provided on the substrate (10) between the antenna pads (9a), said polymeric filling structure being able to be connected to the carrier film (6) of the chip by means of lamination.

10. Method for producing a personal document which has a chip (3), which has been thinned to a thickness d ≤ 50 µm, as an integral part,
having the following method steps:
a) a chip film (2) is produced by connecting the patterned side (3a) and the rear (3b) of the thinned chip (3) to a polymeric carrier film (6, 7) by means of a coupling reagent, the molecules of which have a first chemical functional group which reacts with the semiconductor material of the chip surface and forms a covalent bond thereon and also have a second functional group which reacts with the polymer matrix of the carrier film,
b) the chip film (2) is applied to a substrate (10) which has been provided with an antenna structure (9) and which has been provided with a polymer which is compatible with the chip film (2),
c) the chip film (2) is connected to the substrate (10) to make contact with the antenna connections (9a) under the action of pressure and temperature by means of lamination,
d) a top layer (14) which has been provided with a polymer which is compatible with the chip film (2) is laminated on.

11. Method according to Claim 10, in which the chip (3) is connected to the carrier film (6, 7) by means of reaction of the coupling reagent with the semiconductor material of the chip surface, on the one hand, and the polymer matrix, on the other hand, together with the lamination of the chip film (2) with the substrate (10) and the making of contact with the antenna connections.

12. Method according to one of Claims 10 and 11, in which, before the chip film (2) is applied, a polymeric filling structure (12) is arranged in interspaces between the antenna pads (9a) on the substrate (10).

13. Method according to one of Claims 10 to 12, in which, before the chip film (2) is applied, an embossing and pressing operation is performed on the region of the substrate (10) in which the chip (3) is intended to be positioned.

14. Method according to one of Claims 10 to 13, in which, before the chip film (2) is connected to the substrate (10), electrically conductive material (8) is arranged on the electrical connections of the chip.

15. Method for producing a personal document which has a chip (3), which has been thinned to a thickness d ≤ 50 *µ*m, as an integral part,
having the following method steps:
a) a chip film (2) is produced by connecting the patterned side (3a) and the rear (3b) of the thinned chip (3) to a polymeric carrier film (6, 7) by means of a coupling reagent, the molecules of which have a first chemically functional group which reacts with the semiconductor material of the chip surface and forms a covalent bond thereon and also have a second functional group which reacts with the polymer matrix of the carrier film (6, 7),
b) the chip film (2) is applied to a substrate (10) which has been provided with a polymer which is compatible with the chip film (2),
c) the chip film (2) is connected to the substrate (10) under the action of pressure and temperature by means of lamination,
d) an antenna (9) is applied to the laminate produced in this manner,
e) a top layer (14) which has been provided with a polymer which is compatible with the chip film (2) is laminated on.

## Revendications

1. Document personnel doté d'une puce intégrée lisible sans contact,
le document personnel (1) étant constitué d'un stratifié qui est constitué d'au moins une feuille (2) de puce, d'un substrat (10) qui recouvre la feuille (2) de puce sur le côté structuré (3a) de la puce et d'une couche de recouvrement (14) qui recouvre le dos de la feuille (2) de puce,
la feuille (2) de puce étant constituée d'une puce (3) dotée d'un circuit intégré et d'une feuille polymère de support (6, 7) qui, sauf sur les bornes de contact, est appliquée à la fois sur le côté structuré (3a) et sur le côté dorsale (3b) de la puce (3) et
la puce (3) étant reliée à une antenne (9) prévue sur le substrat (10),
**caractérisé en ce que**
la puce (3) est amincie à une épaisseur d ≤ 50 *µ*m, **en ce que** la puce (3) est reliée sur ses deux faces à la feuille de support (6, 7), chaque fois par un réactif de couplage dont les molécules présentent un premier groupe chimique fonctionnel avec lequel le matériau semi-conducteur de la surface de la puce réagit et forme en cet endroit une liaison covalente, ainsi qu'un deuxième groupe fonctionnel qui réagit avec la matrice polymère de la feuille de support (6, 7) et
**en ce que** la feuille de support (6, 7), le substrat (10) et la couche de recouvrement (14) présentent des polymères compatibles qui sont miscibles les uns avec les autres.

2. Document personnel selon la revendication 1, dans lequel une couche supplémentaire de protection contre la lumière est appliquée au-dessus et en dessous de la puce (3).

3. Document personnel selon les revendications 1 ou 2, dans lequel les contractions des couches polymères provoquées par l'orientation moléculaire se compensent mutuellement.

4. Document personnel selon l'une des revendications 1 à 3, dans lequel les dilatations thermiques des couches polymères se compensent mutuellement.

5. Document personnel selon l'une des revendications 1 à 4, dans lequel les couches polymères contiennent des feuilles polymères étirées biaxialement.

6. Document personnel selon l'une des revendications 1 à 5, dans lequel la feuille de support (6, 7) entoure complètement la puce (3) à l'exception de ses emplacements de contact.

7. Document personnel selon l'une des revendications 1 à 6, dans lequel une couche électriquement conductrice (8) est appliquée sur les bornes de contact et dans lequel la couche électriquement conductrice (8) est formée d'un polymère intrinsèquement conducteur.

8. Document personnel selon la revendication 7, dans lequel la couche électriquement conductrice (8) est constituée d'une poudre métallique nanoscopique frittable.

9. Document personnel selon l'une des revendications 1 à 8, dans lequel une structure polymère de charge est prévue sur le substrat (10) entre les surfaces (9a) de raccordement d'antenne et peut être reliée par stratification à la feuille de support (6) de la puce.

10. Procédé de fabrication d'un document personnel qui présente une puce (3) amincie à une épaisseur d ≤ 50 *µ*m qui en forme un composant intégré,
le procédé présentant les étapes qui consistent à :
a) préparer une feuille de puce (2) en reliant le côté structuré (3a) et le côté dorsal (3b) de la puce amincie (3) à une feuille polymère de support (6, 7) au moyen d'un réactif de couplage dont les molécules présentent un premier groupe chimique fonctionnel avec lequel le matériau semi-conducteur de la surface de la puce réagit pour former en cet endroit une liaison covalente, ainsi qu'un deuxième groupe fonctionnel qui réagit avec la matrice polymère de la feuille de support,
b) appliquer la feuille de puce (2) sur un substrat (10) doté d'une structure d'antenne (9) et d'un polymère compatible avec la feuille de puce (2),
c) relier la feuille de puce (2) au substrat (10) et assurer le contact des raccordements d'antenne (9a) par l'action de la pression et de la température, au moyen d'une stratification,
d) stratifier sur la feuille de puce (2) une couche de recouvrement (14) dotée d'un polymère compatible.

11. Procédé selon la revendication 10, dans lequel la liaison de la puce (3) avec la feuille de support (6, 7) s'effectue en faisant réagir le réactif de couplage avec le matériau semi-conducteur de la surface de la puce, d'une part, et la matrice polymère, d'autre part, en même temps que la stratification de la feuille de puce (2) avec le substrat (10) et la mise en contact des raccordements d'antenne.

12. Procédé selon l'une des revendications 10 ou 11, dans lequel, avant l'application de la feuille de puce (2), une structure polymère de charge (12) est placée sur le substrat (10) entre les surfaces (9a) de raccordement d'antenne.

13. Procédé selon l'une des revendications 10 à 12, dans lequel, avant l'application de la feuille de puce (2), une opération de gaufrage et de compression est appliquée sur la partie du substrat (10) dans laquelle la puce (3) doit être placée.

14. Procédé selon l'une des revendications 10 à 13, dans lequel, avant la liaison de la feuille de puce (2) au substrat (10), un matériau électriquement conducteur (8) est placé sur les raccordements électriques de la puce.

15. Procédé de fabrication d'un document personnel qui présente une puce (3) amincie à une épaisseur d ≤ 50 *µ*m qui en forme un composant intégré,
le procédé présentant les étapes qui consistent à :
a) préparer une feuille de puce (2) en reliant le côté structuré (3a) et le côté dorsal (3b) de la puce amincie (3) à une feuille polymère de support (6, 7) au moyen d'un réactif de couplage dont les molécules présentent un premier groupe chimique fonctionnel avec lequel le matériau semi-conducteur de la surface de la puce réagit pour former en cet endroit une liaison covalente, ainsi qu'un deuxième groupe fonctionnel qui réagit avec la matrice polymère de la feuille de support (6,7),
b) appliquer la feuille de puce (2) sur un substrat (10) doté d'un polymère compatible avec la feuille de puce (2),
c) relier la feuille de puce (2) au substrat (10) et assurer le contact des raccordements d'antenne par l'action de la pression et de la température, au moyen d'une stratification,
d) appliquer une antenne (9) sur le stratifié ainsi formé et
e) stratifier sur la feuille de puce une couche de recouvrement (14) dotée d'un polymère compatible.
